# EUROPEAN PATENT SPECIFICATION

(11) **EP 2 881 216 B1**
(45) Date of publication and mention of the grant of the patent: **04.04.2018**
(21) Application number: 14196135.9
(22) Date of filing: 03.12.2014
(51) Int. Cl.: B05B 7/22, B23K 26/00, C23C 26/02, B23K 26/34, B23K 35/02

(54) **Laser cladding system and method using metal-filled wires**
Laserauftragschweißsystem und Verfahren mit metallgefüllten Fülldrähten
Système et procédé de revêtement au laser avec des fils fourrés de métal

(30) Priority: 06.12.2013 US 201314098816
(43) Date of publication of application: 10.06.2015
(73) Proprietor: General Electric Company, Schenectady, NY 12345 (US)
(72) Inventor: Lin, Dechao, Greenville, SC South Carolina 29615 (US); Dimascio, Paul Stephen, Greenville, SC South Carolina 29615 (US); Bucci, David Vincent, Greenville, SC South Carolina 29615 (US); Kotilingam, Srikanth Chandrudu, Greenville, SC South Carolina 29615 (US); Cui, Yan, Greenville, SC South Carolina 29615 (US)
(74) Representative: Foster, Christopher Michael

(56) References cited:
- DE-A1- 2 238 688
- DE-A1- 3 928 092
- GB-A- 1 383 304

## Description

### BACKGROUND OF THE INVENTION

The subject matter disclosed herein relates to laser cladding systems and methods and, more specifically, to laser cladding systems and methods using metal-filled wires.

Metal and alloy components in a variety of industrial applications often require a variety of coating or welding operations during manufacturing and/or repair. For example, gas turbine engines include fuel nozzles to deliver combustion fuel to combustor components. Over a period of extended use, fuel nozzles may experience deterioration, e.g., around the edges of the nozzle tip. Processes that build metal layers by traditional fusion welding may require significant heat input. Also, welding processes may lead to potential distortion of turbine components if not properly taken into account.

To mitigate some effects of fusion welding, a process with a low heat input may be used. Laser cladding may use a sufficiently low temperature for restoring a nozzle tip to the correct dimensions, but depositing metal on the edge of a nozzle using laser cladding techniques can be difficult. Moreover, the delivery of the powder metal may be prone to powder loss and/or environmental contaminants if not properly accounted for. While the utilization of flux may provide a low melting material, laser heating may lead to plasma formation that interrupts the laser and potentially require supplemental rework to resolve such interruptions.

Document DE 3928092 A1 describes a laser cladding system and method in which a powder core surrounded by a wire coat is electro-resistance heated via a contact in a nozzle holder before it is fed over a substrate into the laser beam. DE 22 38 688 A1 discloses a metal filled core with powder metal and with wire metal.

Accordingly, alternative laser cladding systems and methods would be welcome in the art.

### BRIEF DESCRIPTION OF THE INVENTION

In one embodiment, a laser cladding system is disclosed. The laser cladding system includes a metal-filled wire comprising a metal shell surrounding a metal-filled core, wherein the metal-filled core comprises at least one of a powder metal and a fine wire metal, each having a melting temperature of at least about 1300 °C and each of the fine wire metals having a diameter of from about 0.08 mm (0.003 inches) to about 0.15 mm (0.006 inches), and a laser that produces a laser beam directed onto at least a portion of a tip of the metal-filled wire to melt the metal shell and metal-filled core to produce a molten pool for depositing on a substrate. In another embodiment, a laser cladding method is disclosed. The laser cladding method includes providing a substrate having a surface and providing a tip of a metal-filled wire proximate the surface, wherein the metal-filled wire comprises a metal shell surrounding a metal-filled core, and wherein the metal-filled core comprises at least one of a powder metal and a fine wire metal, each having a melting temperature of at least about 1300 °C and each of the fine wire metals having a diameter of from about 0.08 mm (0.003 inches) to about 0.15 mm (0.006 inches). The laser cladding method further includes directing a laser beam from a laser onto at least a portion of the tip of the metal-filled wire to melt the metal shell and metal-filled core to produce a molten pool on the surface of the substrate.

These and additional features provided by the embodiments discussed herein will be more fully understood in view of the following detailed description, in conjunction with the drawings.

### BRIEF DESCRIPTION OF THE DRAWINGS

The embodiments set forth in the drawings are illustrative and exemplary in nature and not intended to limit the inventions defined by the claims. The following detailed description of the illustrative embodiments can be understood when read in conjunction with the following drawings, where like structure is indicated with like reference numerals and in which:
FIG. 1 is a schematic illustration of a side view of a laser cladding system according to one or more embodiments shown or described herein;
FIG. 2 is an overhead view of a cladding layer being deposited via the laser cladding system of FIG. 1 according to one or more embodiments shown or described herein;
FIG. 3 is a schematic illustration of a cross section of metal-filled wire used in the laser cladding system according to one or more embodiments shown or described herein; and,
FIG. 4 is an illustration of a laser cladding method according to one or more embodiments shown or described herein.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Laser cladding systems generally comprise metal-filled wires and lasers. The metal-filled wire facilitates the delivery of powder metal and/or fine wire metal to the molten pool produced by the laser while mitigating the effect of environmental constituents (e.g., contaminants). The laser thereby directs a laser beam onto at least a portion of the tip of the metal-filled wire to melt both the metal shell and metal-filled core of the metal-filled wire and produce the cladding layer on the substrate. By supplying the powder metal and/or fine wire metal internally the metal-filled wire, laser cladding may be utilized to deposit a clean, consistent cladding layer while utilizing relatively low laser power and applied heat. Laser cladding systems and methods will now be described in more detail herein.

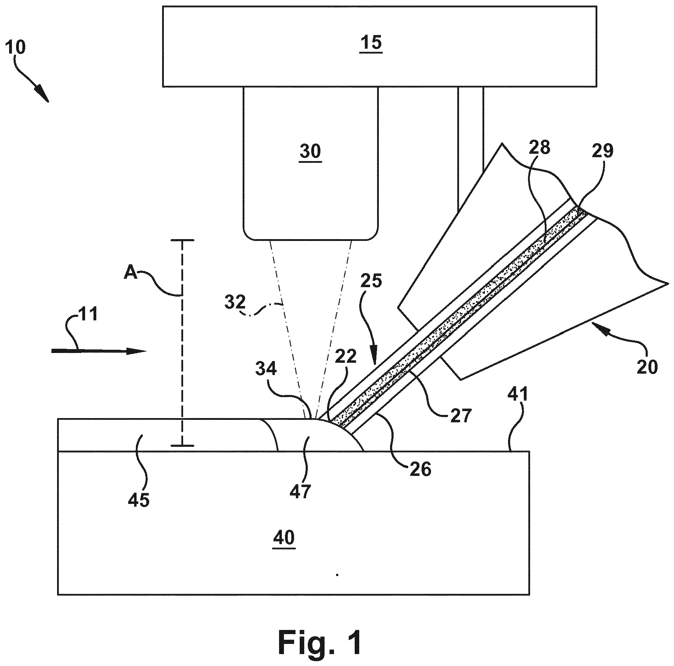

Referring now to FIGS. 1-3, a laser cladding system 10 is illustrated. The laser cladding system 10 generally comprises a metal-filled wire 25 and a laser 30.

The metal-filled wire 25 comprises a metal shell 26 surrounding a metal-filled core 27. The metal-filled core 27 and the metal shell 26 generally comprise materials suitable for laser cladding - i.e., materials that can melt from the power of the laser beam produced by the laser and subsequently bond with and solidify on the surface 41 of the substrate 40. Substrates 40 may comprise, for example, any metal or alloy substrate such as any turbine component of a gas turbine (e.g., liners, nozzles, blades, vanes, buckets, combustors, etc.).

The metal-filled core 27 comprises at least one of a powder metal 28 (i.e., metal in powder form that can fit within the metal shell 26 of the metal-filled wire 25) or a fine wire metal 29 (i.e., metal in fine wire, bristle or hair-like form that can fit within the metal shell 26 of the metal-filled wire 25). In some embodiments, the metal-filled core 27 may comprise a single or a plurality of powder metals 28. In some embodiments, the metal-filled core 27 may comprise a single type or a plurality of types of fine wire metals 29. In even some embodiments, the metal-filled core 27 may comprise a combination of one or more types of powder metals 28 and one or more types of fine wire metals 29. The various powder metals 28 and fine wire metals 29 may comprise different or similar materials that can melt from the power of the laser beam and subsequently bond with and solidify on the surface 41 of the substrate 40. For example, in some embodiments, the metal-filled core 27 can comprise, Nimonic 263, stainless steel, nickel based superalloys, nickel coated Al₂O₃, cobalt based superalloys, iron based superalloys or other suitable metals or alloys, and combinations thereof. In some embodiments, the metal-filled core 27 may comprise a single material. In other embodiments, the metal-filled core 27 may comprise a plurality of materials. In even some embodiments, at least some of the material or materials of the metal-filled core 27 may have the same material composition (i.e., the same material albeit in a different form) as the metal shell 26 and/or the substrate 40 itself.

Furthermore, the metal-filled core 27 can comprise particles (i.e., powder metal 28) of uniform or non-uniform sizes. In some embodiments, the metal-filled core 27 can comprise one or more smaller fine wires (i.e., fine wire metals 29) with uniform or non-uniform sizes. Such fine wires may each have a diameter ranging from, for example, from about 0.08 mm (0.003 inches) to about 0.15 mm (0.006 inches) and can similarly comprise Nimonic 263, stainless steel, nickel based superalloys, nickel coated Al₂O₃, cobalt based superalloys, iron based superalloys or other suitable metals or alloys, and combinations thereof. In some particular embodiments, the fine wire metals 29 may each comprise the same single material. In other embodiments, the fine wire metals 29 may comprise a plurality of types of materials.

In some embodiments, the metal-filled core 27 may comprise one or more powder metals 28 and/or fine wire metals 29 that each has a melting temperature of at least 1300 °C. Such embodiments may help prevent the formation of slag that can result from using lower melting constituents. For example, in even some embodiments, the metal-filled core 27 may be flux free. Specifically, the metal-filled core 27 may be free of constituents utilized to facilitate lower temperature melting and/or oxidation of other materials but also result in the formation of slag.

Similar to the metal-filled core 27, the metal shell 26 can also comprise, for example, Nimonic 263, stainless steel, nickel based superalloys, nickel coated Al₂O₃, cobalt based superalloys, iron based superalloys or other suitable metals or alloys, and combinations thereof. In some embodiments, the metal shell 26 may comprise a single material. In other embodiments, the metal shell 26 may comprise a plurality of materials. In even some embodiments, at least some of the material or materials of the metal shell 26 may have the same material composition (i.e., the same material albeit in a different form) as the metal-filled core 27 and/or the substrate 40 itself.

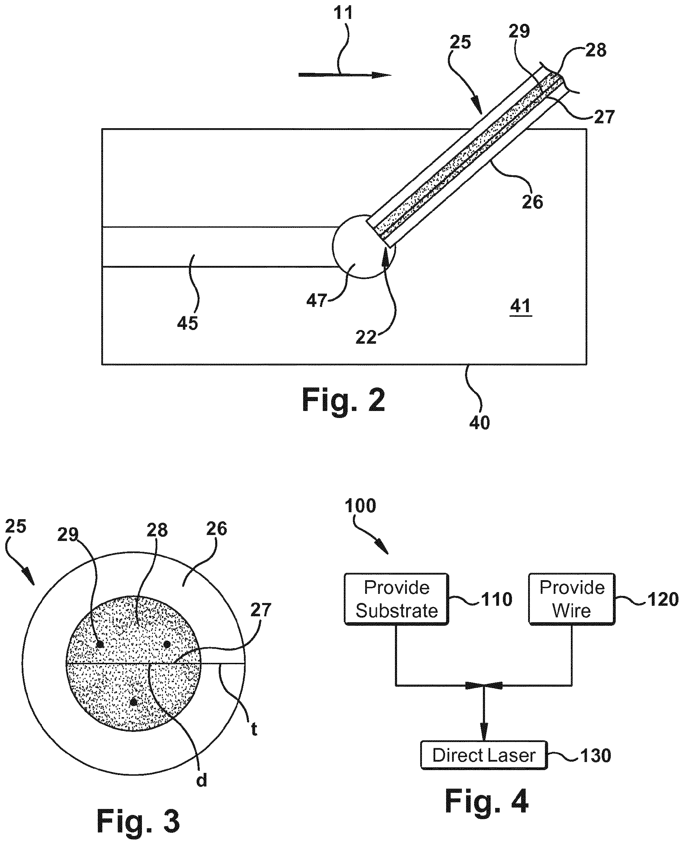

The metal-filled wire 25 may comprise a variety of sizes, shapes and relative configurations. For example, in some embodiments, such as illustrated in FIGS. 1-3, the metal-filled wire 25 may comprise a generally tubular metal shell 26 with a cylindrical cross section surrounding the metal-filled core 27. The metal shell 26 may alternatively or additionally comprise an oval-like cross section, square-like cross section, rectangular-like cross section or any other geometrical or non-geometrical shaped cross section. Furthermore, the metal shell 26 may generally comprise a variety of relative thicknesses of the metal-filled wire with respect to the metal-filled core 27. For example, the metal shell 26 may comprise a shell thickness t compared to a core diameter d as illustrated in FIG. 3. In some embodiments, the shell thickness t may range from about 0.08 mm (0.003 inches) to about 0.25 mm (0.01 inches). In some embodiments, the core diameter d may range from about 0.64 mm (0.025 inches) to about 1.14 mm (0.045 inches).

In some embodiments, such as that illustrated in FIG. 1, the metal-filled wire 25 may be provided through a wire feed device 20. The wire feed device may comprise any device that is able to continually feed and direct the metal-filled wire 25 towards the targeted deposition area. In some particular embodiments, the wire feed device 20 may advance in the cladding direction 11 while simultaneously feeding a continual amount of metal-filled wire 25 so that the molten pool 47 has a constant supply of new material while the cladding layer 45 advances.

Still referring to FIGS. 1 and 2, the laser cladding system 10 further comprises the laser 30. The laser 30 can comprise any laser system that can produce and direct a laser beam 32 towards at least a portion of the tip 22 of the metal-filled wire 25. Specifically, the laser 30 can produce a laser beam 32 that can be directed towards at least a portion of the tip 22 of the metal-filled wire 25 to melt both the metal shell 26 and the metal-filled core 27. In some embodiments, the laser 30 can produce a laser beam 32 that is also directed towards at least a portion of the surface 41 of the substrate.

The laser 30 can comprise any type of laser that can melt both the metal shell 26 and the metal-filled core 27 of the metal-filled wire 25. For example, in some embodiments, the laser 30 can be selected from a Nd: YAG laser, a CO₂ laser, a fiber laser, and a disk laser. In some embodiments, the laser 30 can produce a laser beam 32 of from about 400 watts to about 1,000 watts. In even some embodiments, the laser 30 can produce a laser beam 32 of less than or equal to about 800 watts. Furthermore, the laser 30 can produce either a continuous or a pulsed laser beam 32 may be focused or defocused on the tip 22 of the metal-filled wire 25.

The laser 30 can be disposed at a laser height A away from the surface 41 of the substrate 40. In some embodiments, laser height A between the laser 30 and the surface 41 of the substrate 40 remains fixed. In some embodiments, laser height A varies. In some embodiments, the laser beam 32 produced by the laser 30 may focus directly on the tip 22 of the metal-filled wire 25 such that the laser spot 34 on the tip 22 is relatively small. However, in some embodiments, the laser beam 32 may be focused above or below the tip 22 such that the laser spot 34 is larger. For example, the laser beam 32 may be focused at a point above the surface 41 of the substrate having a height of approximately 5 millimeters to approximately 15 millimeters, or alternatively approximately 8 millimeters to approximately 13 millimeters, or alternatively approximately 10 millimeters to approximately 12 millimeters. Such embodiments may distribute the concentration of energy across a larger area of surface 41 of the substrate 40 and the tip 22 of the metal-filled wire 25.

Referring to FIG. 1, in some embodiments, the wire feed device 20 and the laser 30 may be connected to a common mount 15. Such an embodiment may facilitate the laser 30 moving in unison with the wire feed device 20 as it deposits the cladding layer 45 in the cladding direction 11. In other embodiments, the wire feed device 20 and the laser 30 may be connected to separate fixtures but still transverse the substrate 40 in unison in the cladding direction 11 such as via an autofocus on the laser 30 that follows the movement of the tip 22 of the metal-filled wire 25. In even yet another embodiment, the wire feed device 20 and the laser 30 may be held stationary, either being connected to the common mount 15 or to separate mounts, while the substrate 40 moves relative to both devices.

It should be appreciated that the construction and arrangement of the metal-filled wire 25, the wire feed device 20 and the laser 30 illustrated in FIG. 1 is illustrative only and is not intended to be limiting. Furthermore, although some specific embodiments have been described in detail in this disclosure, those skilled in the art should appreciate that alternative or additional modifications are possible including variations in sizes, dimensions, structures, shapes and proportions of the various elements, values of parameters, mounting arrangements, angles, use of materials, orientations, speeds, and the like.

In operation, the metal-filled wire 25 may be disposed so that its tip 22 is proximate the surface 41 of the substrate. The laser 30 can then produce a laser beam 32 directed onto at least a portion of the tip 22 such that it causes both the metal shell 26 and the metal-filled core 27 of the metal-filled wire to melt onto the surface 41 of the substrate 42. The molten pool 47 created by the melted metal shell 26 and the metal-filled core 27 can subsequently bond with and solidify on or with the surface 41 to produce the cladding layer 45 on the substrate 40. This process can continue in the cladding direction 11 by continually advancing the metal-filled wire 25 (such as via a wire feed device 20) and the laser 30 relative to a stationary substrate 40, by moving the substrate 40 relative to a stationary metal-filled wire 25 and laser 30, or combinations thereof. The process can continue to deposit the cladding layer 45 to cover any suitable area of the substrate 40. For example, in some embodiments, the cladding layer 45 may be deposited (i.e., the molten pool 47 may solidify) as a turbulator (i.e., a configuration that can disrupt laminar air flow into turbulent air flow. Such embodiments may in particular be realized for liners for turbines.

In some embodiments, a shielding gas may be provided around the tip 22 of the metal-filled wire 25. The shielding gas can comprise, for example, argon, nitrogen, helium, or the like or combinations thereof. In some specific embodiments, the shielding gas may be preheated prior to being provided around the tip 22 of the metal-filled wire 25 to help increase the potential deposition rate from the laser cladding system 10.

Referring now additionally to FIG. 4, a laser cladding method 100 is illustrated for cladding at least a portion of a surface 41 of a substrate 40 using the laser cladding systems 10 disclosed herein. The laser cladding method 100 first comprises providing a substrate 40 having a surface 41 in step 110. As discussed above, the substrate can comprise any metal or alloy component capable of bonding with the cladding layer 45 produced from the metal-filled wire 25. In some embodiments, the substrate 40 may comprise a turbine component from a gas turbine such as a liner, nozzle, blade, vane, bucket, combustor or the like.

The laser cladding method 100 further comprises providing a tip 22 of a metal-filled wire 25 proximate the surface 41 of the substrate 40 in step 120. As discussed herein, the metal-filled wire 25 comprises a metal shell 26 surrounding a metal-filled core 27. Moreover, in some embodiments the metal-filled wire 25 may be provided via a wire feed device 20.

The laser cladding method 100 further comprises directing a laser beam 32 onto at least a portion of the tip 22 of the metal-filled wire 25 in step 130 to melt the metal shell 26 and metal-filled core 27. As discussed above, melting the metal shell 26 and the metal-filled core 27 produces a molten pool 47 on the surface 41 that will subsequently bond with and solidify on the surface 41 to produce the cladding layer 45 on the substrate 40. In some embodiment, at least the portion of the tip 22 may be preheated prior to directing the laser beam 32. In some embodiments, the method 100 further comprises advancing the wire feed device 20 and the laser 30 in unison in the cladding direction 11.

It should now be appreciated that laser cladding systems and method may utilize metal-filled wires comprising a metal shell surrounding a metal-filled core. By supplying the powder metal(s) and/or fine wire metal(s) internally the metal-filled wire, laser cladding may be utilized to deposit a clean, consistent cladding layer while utilizing relatively low laser power and applied heat. Furthermore, utilizations of flux materials or excessive heat may be avoided thereby facilitating a more consistent and higher quality cladding layer.

While the invention has been described in detail in connection with only a limited number of embodiments, it should be readily understood that the invention is not limited to such disclosed embodiments. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A laser cladding system (10) comprising:
a laser (30) that produces a laser beam (32) directed onto at least a portion of a tip (22) of a metal-filled wire (25), wherein the metal-filled wire (25) comprising a metal shell (26) surrounding a metal-filled core (27), to melt the metal shell (26) and metal-filled core (27) to produce a molten pool (47) for depositing on a substrate (40);
**characterized in that**
the metal-filled core (27) comprises one or more powder metals (28) and one or more fine wire metals (29) each having a melting temperature of at least about 1300 °C and each of the fine wire metals (29) having a diameter of from about 0.08 mm (0.003 inches) to about 0.15 mm (0.006 inches).

2. The laser cladding system of claim 1, wherein the metal-filled core (27) is flux free.

3. The laser cladding system of claim 1 or 2, wherein the metal-filled core (27) and the metal shell (26) comprise a common material composition.

4. The laser cladding system of any of claims 1 to 3, adapted for use with a substrate (40) comprising a turbine component.

5. The laser cladding system of claim 4, wherein the turbine component comprises a liner.

6. The laser cladding system of any preceding claim, wherein the laser beam (32) produced by the laser (30) is from about 400 watts to about 1,000 watts.

7. The laser cladding system of any preceding claim, wherein the metal-filled wire (25) is fed through a wire feed device (20).

8. The laser cladding system of any preceding claim, wherein the metal-filled wire (25) comprises a diameter of from about 0.64 mm (0.025 inches) to about 1.14 mm (0.045 inches).

9. A laser cladding method comprising:
providing a substrate (40) having a surface (41);
providing a tip (22) of a metal-filled wire (25) proximate the surface (41), and
directing a laser beam (32) from a laser (30) onto at least a portion of the tip (22) of the metal-filled wire (25), wherein the metal-filled wire (25) comprising a metal shell (26) surrounding a metal-filled core (27), to melt the metal shell (26) and metal-filled core (27) to produce a molten pool (47) on the surface (41) of the substrate (40);
**characterized in that**
the metal-filled core (27) comprises one or more powder metals (28) and one or more fine wire metals (29) each having a melting temperature of at least about 1300 °C and each of the fine wire metals (29) having a diameter of from about 0.08 mm (0.003 inches) to about 0.15 mm (0.006 inches).

10. The laser cladding method of claim 9, further comprising providing a shielding gas around the tip (22) of the metal-filled wire (25) while producing the molten pool (47).

11. The laser cladding method of claim 9 or 10, further comprising preheating at least the portion of the tip (22) prior to directing the laser beam (32).

12. The laser cladding method of any of claims 9 to 11, wherein the metal-filled core (27) comprises one or more powder metals (28) or fine wire metals (29) each having a melting temperature of at least about 1300 °C.

13. The laser cladding method of any of claims 9 to 12, wherein the metal-filled core (27) is flux free.

## Patentansprüche

1. Ein Laserummantelungssystem (10) umfassend:
einen Laser (30), der einen Laserstrahl (32) erzeugt, der auf mindestens einen Teil einer Spitze (22) eines metallgefüllten Drahts (25) ausgerichtet ist, wobei der metallgefüllte Draht (25) eine Metallhülle (26) umfasst, die einen metallgefüllten Kern (27) umgibt, um die Metallhülle (26) und den metallgefüllten Kern (27) zu schmelzen, um ein Schmelzbad (47) zum Abscheiden auf einem Substrat (40) zu erzeugen;
**dadurch gekennzeichnet, dass**
der metallgefüllte Kern (27) ein oder mehrere Pulvermetalle (28) und ein oder mehrere Feindrahtmetalle (29) umfasst, die jeweils eine Schmelztemperatur von mindestens ungefähr 1300°C aufweisen und wobei jedes der Feindrahtmetalle (29) einen Durchmesser von ungefähr 0,08 mm (0,003 Zoll) bis ungefähr 0,15 mm (0,006 Zoll) aufweist.

2. Das Laserummantelungssystem nach Anspruch 1, wobei der metallgefüllte Kern (27) flussmittelfrei ist.

3. Das Laserummantelungssystem nach Anspruch 1 oder 2, wobei der metallgefüllte Kern (27) und die Metallhülle (26) eine gemeinsame Materialzusammensetzung umfassen.

4. Das Laserummantelungssystem nach einem der Ansprüche 1 bis 3, das geeignet ist, um mit einem Substrat (40) verwendet zu werden, das eine Turbinenkomponente umfasst.

5. Das Laserummantelungssystem nach Anspruch 4, wobei die Turbinenkomponente eine Verkleidung umfasst.

6. Das Laserummantelungssystem nach einem der vorhergehenden Ansprüche, wobei der von dem Laser (30) erzeugte Laserstrahl (32) von ungefähr 400 W bis ungefähr 1.000 W reicht.

7. Das Laserummantelungssystem nach einem der vorhergehenden Ansprüche, wobei der metallgefüllte Draht (25) durch eine Drahtzufuhrvorrichtung (20) zugeführt wird.

8. Das Laserummantelungssystem nach einem der vorhergehenden Ansprüche, wobei der metallgefüllte Draht (25) einen Durchmesser von ungefähr 0,64 mm (0,025 Zoll) bis ungefähr 1,14 mm (0,045 Zoll) umfasst.

9. Ein Laserummantelungsverfahren, umfassend:
Bereitstellen eines Substrats (40), das eine Oberfläche (41) aufweist;
Bereitstellen einer Spitze (22) eines metallgefüllten Drahts (25) in der Nähe der Oberfläche (41), und
Ausrichten eines Laserstrahls (32) von einem Laser (30) auf mindestens einen Teil der Spitze (22) des metallgefüllten Drahts (25), wobei der metallgefüllte Draht (25) eine Metallhülle (26) umfasst, die einen metallgefüllten Kern (27) umgibt, um die Metallhülle (26) und den metallgefüllten Kern (27) zu schmelzen, um ein Schmelzbad (47) auf der Oberfläche (41) des Substrats (40) zu erzeugen;
**dadurch gekennzeichnet, dass**
der metallgefüllte Kern (27) ein oder mehrere Pulvermetalle (28) und ein oder mehrere Feindrahtmetalle (29) umfasst, die jeweils eine Schmelztemperatur von mindestens ungefähr 1300°C aufweisen und wobei jedes der Feindrahtmetalle (29) einen Durchmesser von ungefähr 0,08 mm (0,003 Zoll) bis ungefähr 0,15 mm (0,006 Zoll) aufweist.

10. Das Laserummantelungsverfahren nach Anspruch 9, das ferner ein Bereitstellen eines Abschirmgases um die Spitze (22) des metallgefüllten Drahts (25) umfasst, während das Schmelzbad (47) erzeugt wird.

11. Das Laserummantelungsverfahren nach Anspruch 9 oder 10, das ferner ein Vorheizen mindestens des Teils der Spitze (22) umfasst, bevor der Laserstrahl (32) ausgerichtet wird.

12. Das Laserummantelungsverfahren nach einem der Ansprüche 9 bis 11, wobei der metallgefüllte Kern (27) ein oder mehrere Pulvermetalle (28) oder Feindrahtmetalle (29) umfasst, die jeweils eine Schmelztemperatur von mindestens ungefähr 1300°C aufweisen.

13. Das Laserummantelungsverfahren nach einem der Ansprüche 9 bis 12, wobei der metallgefüllte Kern (27) flussmittelfrei ist.

## Revendications

1. Système de placage au laser (10) comprenant :
un laser (30) qui produit un faisceau laser (32) dirigé sur au moins une partie d'un bout (22) d'un fil fourré de métal (25), le fil fourré de métal (25) comprenant une enveloppe métallique (26) entourant une âme fourrée de métal (27), pour faire fondre l'enveloppe métallique (26) et l'âme fourrée de métal (27) pour produire une masse fondue (47) pour dépôt sur un substrat (40) ;
**caractérisé en ce que**
l'âme fourrée de métal (27) comprend un ou plusieurs métaux en poudre (28) et un ou plusieurs métaux en fils fins (29) ayant chacun une température de fusion d'au moins 1300 °C environ et chacun des métaux en fils fins (29) ayant un diamètre d'environ 0,08 mm (0,003 pouce) à environ 0,15 mm (0,006 pouce).

2. Système de placage au laser de la revendication 1, dans lequel l'âme fourrée de métal (27) est dépourvue de flux.

3. Système de placage au laser de la revendication 1 ou 2, dans lequel l'âme fourrée de métal (27) et l'enveloppe métallique (26) comprennent une composition de matière commune.

4. Système de placage au laser de l'une quelconque des revendications 1 à 3, adapté pour être utilisé avec un substrat (40) comprenant un composant de turbine.

5. Système de placage au laser de la revendication 4, dans lequel le composant de turbine comprend un revêtement.

6. Système de placage au laser d'une quelconque revendication précédente, dans lequel le faisceau laser (32) produit par le laser (30) fait environ 400 watts à environ 1000 watts.

7. Système de placage au laser d'une quelconque revendication précédente, dans lequel le fil fourré de métal (25) est avancé à travers un dispositif d'avance de fil (20) .

8. Système de placage au laser d'une quelconque revendication précédente, dans lequel le fil fourré de métal (25) présente un diamètre d'environ 0,64 mm (0,025 pouce) à environ 1,14 mm (0,045 pouce).

9. Procédé de placage au laser comprenant les étapes suivantes :
se procurer un substrat (40) ayant une surface (41) ;
placer un bout (22) d'un fil fourré de métal (25) à proximité de la surface (41), et
diriger un faisceau laser (32) provenant d'un laser (30) sur au moins une partie du bout (22) du fil fourré de métal (25), le fil fourré de métal (25) comprenant une enveloppe métallique (26) entourant une âme fourrée de métal (27), pour faire fondre l'enveloppe métallique (26) et l'âme fourrée de métal (27) pour produire une masse fondue (47) sur la surface (41) du substrat (40) ;
**caractérisé en ce que**
l'âme fourrée de métal (27) comprend un ou plusieurs métaux en poudre (28) et un ou plusieurs métaux en fils fins (29) ayant chacun une température de fusion d'au moins 1300 °C environ et chacun des métaux en fil mince (29) ayant un diamètre d'environ 0,08 mm (0,003 pouce) à environ 0,15 mm (0,006 pouce).

10. Procédé de placage au laser de la revendication 9, comprenant en outre l'étape consistant à disposer un gaz protecteur autour du bout (22) du fil fourré de métal (25) tout en produisant la masse fondue (47).

11. Procédé de placage au laser de la revendication 9 ou 10, comprenant en outre l'étape consistant à préchauffer au moins la partie du bout (22) avant de diriger le faisceau laser (32).

12. Procédé de placage au laser de l'une quelconque des revendications 9 à 11, dans lequel l'âme fourrée de métal (27) comprend un ou plusieurs métaux en poudre (28) ou métaux en fils fins (29) ayant chacun une température de fusion d'au moins 1300 °C environ.

13. Procédé de placage au laser de l'une quelconque des revendications 9 à 12, dans lequel l'âme fourrée de métal (27) est dépourvue de flux.
